# EUROPEAN PATENT SPECIFICATION

(11) **EP 2 263 911 B1**
(45) Date of publication and mention of the grant of the patent: **13.08.2014**
(21) Application number: 10166205.4
(22) Date of filing: 16.06.2010
(51) Int. Cl.: B60N 2/28

(54) **Child vehicle seat for forwardly facing and rearwardly facing use**
Vorwärts und rückwärts zu richtender Kindersitz für Fahrzeuge.
Siège-auto pour enfant orientable face à la route et face à la banquette.

(30) Priority: 16.06.2009 NL 2003029
(43) Date of publication of application: 22.12.2010
(73) Proprietor: Ningbo Welldon Manufacturing Co.,Ltd., Jiangbei Distr. Ningbo 315021 (CN)
(72) Inventor: De Zeeuw, Mario, Antonio, Alexander, 7412 BG, Deventer (NL); Vertegaal, Hendricus, Johannes, 7556 SL, Hengelo (NL); Heinemeijer, Rob, Cristian, 7553 LT, Hengelo (NL); Lin, Jiangjuan, 315021, Ningbo (CN)
(74) Representative: Langenhuijsen, Bastiaan Wilhelmus Herman

(56) References cited:
- EP-A1- 0 619 201
- EP-A2- 1 232 902
- DE-A1- 19 722 096
- DE-U1-202009 008 293
- FR-A3- 2 745 535
- GB-A- 2 444 833
- JP-A- 2002 316 565

## Description

The invention relates to a child vehicle seat for forwardly facing and rearwardly facing use.

Several classes are defined in a child seat according to the weight of a child (including an infant). For example, in conformity with ECE R44/04 applied in Europe, child seats for children within a range from about nine months or elder to about twelve years old or younger are classified into three classes according to weights: G1 (9 kg to 18 kg), G2 (15 kg to 25 kg) and G3 (22 kg to 36 kg). In addition to these classes, a G0 class is provided for a child of 0 to 18 months or having a weight of about 3 kg to about 13 kg. The child seats are variously configured according to the classes. For example, as for a sitting attitude, a baby is not allowed to sit forwardly facing on a seat of a vehicle in a baby seat of the G0 class, and a child can sit forwardly facing on a child seat of the G1 class. From the viewpoint of a restraining manner of a baby or a child, the baby or the child is restrained on a seat unit by using a special restraining belt in the child seats of the G0 (rearwardly facing) and G1 (forwardly facing) classes; and the child is restrained by using a seat belt of the vehicle in the child seats of the G2 and G3 classes. In addition, there are various differences according to the classes.

However, a burden is exerted on a user to buy the baby seat and the child seats according to the classes. Furthermore, a product may be discarded with wastage irrespective of the sufficient remainder of the lifetime of the product.

Document FR 2 745 535 A3 discloses a child vehicle seat comprising the features of the preamble of claim 1.

It is an object of the invention to provide a child seat which can be used in both the G0 class and G1 class, and which moreover can be installed relatively easily.

This object can be achieved by providing a child vehicle seat for forwardly facing and rearwardly facing use, comprising: a bottom structure adapted to be placed forwardly facing or rearwardly facing on a passenger's seat in a vehicle, and a seat portion with a guiding means for guiding the shoulder belt portion of a three-point seat-belt around a back side of the seat portion, said seat portion being pivotably connected to said bottom structure, wherein said bottom structure is provided with a transverse belt receiving space for receiving at least a part of a hip belt portion of said three-point seat-belt. Since both the bottom structure and the seat portion are provided with belt guiding means for respectively guiding the hip belt portion and the shoulder belt portion of the three-point seat-belt, and since the seat portion is pivotably connected to the bottom structure, as a result of which the mutual orientation between the should belt portion guiding means and the hip belt portion guiding means can be changed, the child seat according to the invention can be applied in both a forwardly facing orientation and in a rearwardly facing orientation without essentially changing the belt positioning or modifying the construction of the child seat. Hence, neither the shoulder belt portion guiding means nor the hip belt portion guiding means needs to be repositioned or modified for securing the child seat to a vehicle seat. Consequently, the child seat according to the invention can be installed in a relatively simple manner, both in the a forwardly facing orientation and in a rearwardly facing orientation, wherein misuse of the (installation of the) child seat can be prevented as much as possible.

It will be more convenient and commonly more safe for the child to accommodate the child relatively flat in the G0 (rearwardly facing) position and relatively upright in the G1 (forwardly facing) position. In a preferred embodiment of the child vehicle seat according to the invention, the seat portion comprises a seat frame pivotably connected to the bottom structure, and a bucket seat body, commonly with a backrest portion, a foot end portion and side walls, wherein the bucket seat body is movably connected to the seat frame. Application of an intermediate seat frame allows inclination of the bucket seat body, or at least a part of the bucket seat body, which allows adaptation of the orientation of the child carried by the child seat with respect to the vehicle seat. During installation the bottom structure will commonly be positioned in a forwardly facing or a rearwardly facing position onto a vehicle seat. Subsequently, the hip belt portion and the shoulder belt portion of the seat-belt will be positioned and fastened to the child seat, after which the seat portion is positioned against the vehicle seat. Due to the movable though permanent connection between the bucket seat body and the seat frame, adjustment of the orientation of the child seat according to the invention can be realised relatively easily without having to detach and re-attach elements of the child seat, thus without physical modifying the child seat, as a result of which misuse of the child seat can further be prevented. Optionally, the bucket seat body is moved with respect to the seat frame to achieve an optimum (sitting or lying) orientation for the child to be transported. The seat frame will commonly be formed by a tubular frame though may also be formed by a more rigid structure, such as an intermediate shell. Preferably, the seat frame comprises said aforementioned guiding means for guiding the shoulder belt portion of a three-point seat-belt.

The guiding means of the seat portion preferably comprises at least one first guiding element for guiding the shoulder belt portion of a three-point seat-belt during a forwardly facing use of the child seat, and at least one second guiding element for guiding the shoulder belt portion of a three-point seat-belt during a rearwardly facing use of the child seat. More preferably, the first guiding element and the second guiding element are disposed on opposite ends of the seat frame. Application of multiple, preferably substantially equally shaped, guiding elements is commonly advantageous to maintain a more or less similar belt positioning in both the forwardly facing orientation and the rearwardly facing orientation of the child seat. In this context it is noted that the first guiding element and the second guiding element may be part of a single guiding structure, and may be integral part of the seat frame.

In a preferred embodiment the pivoting connection between the seat portion and the bottom structure is positioned in front of the belt receiving space. It has been found that it is favourable to pivotably connect a front part of the seat portion to a front part of the bottom structure to allow a sufficiently large rotation angle for positioning the seat portion of the child seat in an optimum manner dependent on the orientation (G0 or G1) of the child seat. To safely secure the child seat by means of the three-point seat-belt it is preferable to position the belt receiving space more in the centre of the bottom structure, which is commonly behind the aforementioned pivoting connection, as seen from a frontal view.

In another preferred embodiment, the seat portion is pivotable with respect to the bottom structure between a first state wherein the belt receiving space is accessible so as to allow insertion of at least a part of a hip belt portion of said thee-point seat-belt into said receiving space, and a second state wherein access to the belt receiving space is blocked. During operation the child seat is more preferably oriented in the second state wherein access to the belt receiving space is blocked, as a result of which undesired removal of the seat-belt from the belt receiving space can be prevented.

To assure the safety of the child, the child seat preferably comprises at least one belt tensioning device for tensioning at least a part of a hip belt portion of said three-point seat-belt within or at least near the belt receiving space. The tensioning device preferably comprises at least one tensioning element, said tensioning element being movable in a direction enclosing an angle with the seat-belt between a basic position and a tensioning position, in which tensioning position the seat-belt is tensioned by means of the belt tensioning device in use. In the basic position, the tensioning element may form part of a wall defining the belt receiving space. Commonly, the hip belt portion of the seat-belt follows a substantially linear course within the belt receiving space in the basic position of the tensioning element. By moving the tensioning element, the tensioning element will engage and move a part of the seat-belt towards a nonlinear course, as a result of which the seat-belt will be tensioned which further secures the child seat to the vehicle seat. More preferably, the tensioning element is securable in at least the tensioning position to further improve fastening of the child seat to the vehicle seat. In a particular preferred embodiment, the tensioning device comprises at least one gripping handle for operating said tensioning device to facilitate movement of the tensioning element. In this case, the said gripping handle may advantageously be at least partly concealed in the said bottom structure and/or seat portion, at least in the tensioning position.

The belt receiving space is preferably at least partially defined (bordered) by and formed in between at least one first blocking member for blocking the seat-belt during a forwardly faced use of the child vehicle seat, and at least one second blocking member for blocking the seat-belt during a rearwardly faced use of the child vehicle seat. During forwardly facing use of the child seat the seat-belt commonly engages the first blocking member, during a rearwardly facing use of the child seat the seat-belt commonly engages the second blocking member. Advantage of applying opposite blocking member, in between of which the belt receiving space is formed at least partially, is that the child seat is secured in both orientations of the child seat in a safe and reliable manner, which is favourable from a point of safety. More preferably, the height of each blocking member is larger than the height of (the part of) the seat-belt configured to engage the blocking member. In this manner, the securing effect of the belt receiving space can be improved further. In an embodiment the belt receiving space is at least partially formed by a substantially vertically oriented slot in which the seat-belt can be positioned in a substantially vertically orientation. By allowing a (large) front surface of the seat-belt to engage the blocking member(s) a sufficiently large contact area can be obtained resulting in reliable locking of the seat-belt in the belt receiving space.

The invention is illustrated by way of the following non-limitative examples, wherein:
Fig. 1 shows a side view of a child vehicle seat according to the invention in a forwardly faced manner fastened to a vehicle seat,
Fig. 2 shows a side view of the child vehicle seat according to figure 1 in a rearwardly faced manner fastened to a vehicle seat,
Fig. 3 shows a rear view of the child vehicle seat according to figure 1 and 2,
Fig. 4 shows a detailed cut-away view of a tensioning device of the child vehicle seat according to figures 1-3, and
Fig. 5 shows a perspective view of the child vehicle seat provided with an ISOfix frame.

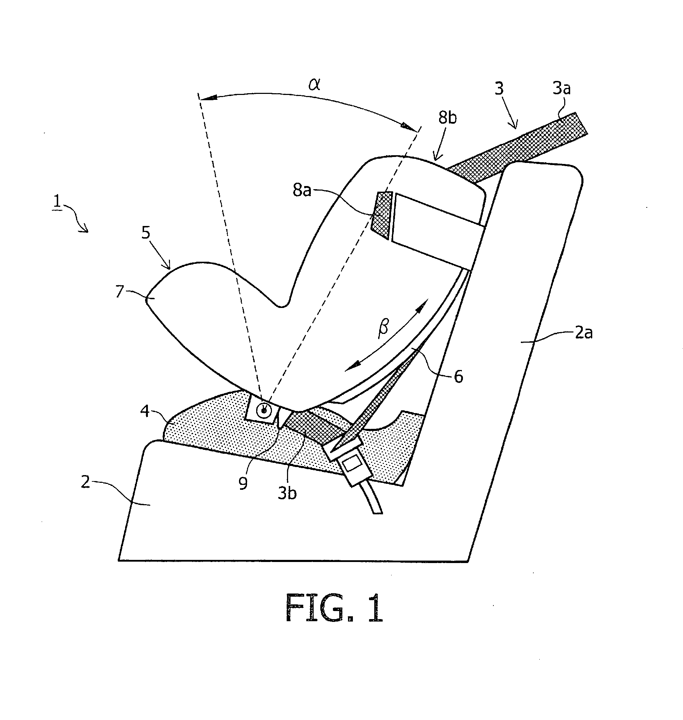

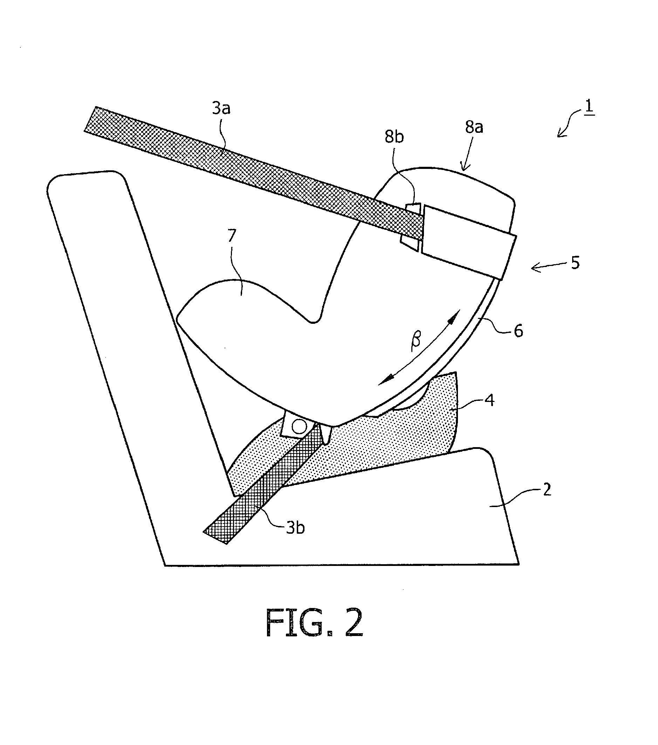

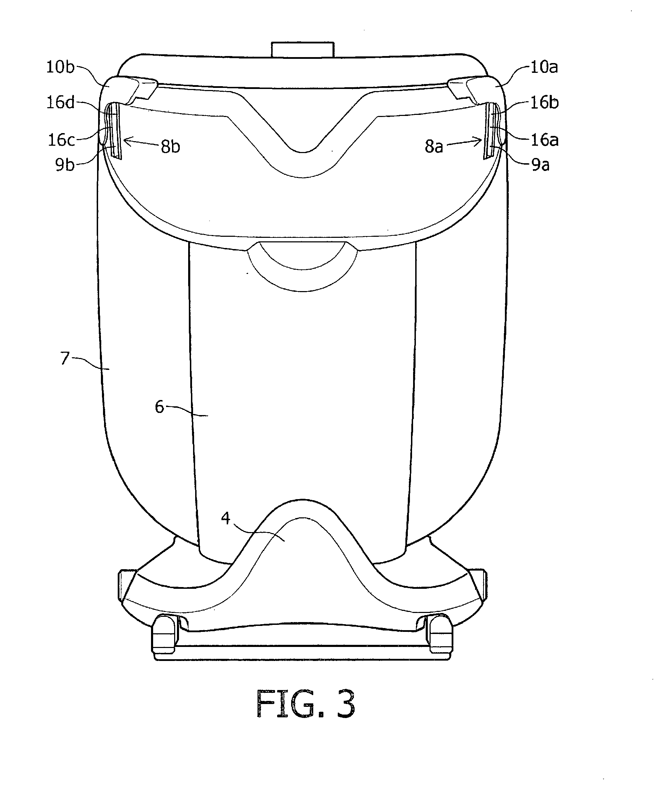

Fig. 1 shows a side view of a child vehicle seat 1 according to the invention in a forwardly faced manner fastened to a vehicle seat 2 by using a three-point seat-belt 3. The child seat 1 comprises a bottom structure 4 and a seat portion 5 pivotably connected to the bottom structure 4. The seat portion 5 comprises a seat frame 6 pivotably connected to the bottom structure 4 (illustratively shown by arrow α), and a bucket seat body 7 which is slidable connected to the seat frame 6 (illustratively shown by arrow β). The seat frame 6 is partially T-shaped, wherein an upper part of the T-shaped portion of the seat frame 6 is provided with two belt guiding elements 8a, 8b (shown in more detail in figure 3) for guiding a shoulder belt portion 3a of the seat-belt 3. In the orientation shown in figure 1 only one of the belt guiding elements 8a, 8b is actually used for guiding the seat-belt 3. The bottom structure 4 is provided with a belt receiving slot 9 for guiding a hip belt portion 3b of the seat-belt 3. The belt receiving slot 9 is partially defined (bordered) by and formed in between two first (substantially) vertically extending blocking members 9a for blocking the seat-belt during a forwardly faced use of the child vehicle seat, and two second (substantially) vertically extending blocking members 9b for blocking the seat-belt during a rearwardly faced use of the child vehicle seat, wherein the belt receiving slot 9 is adapted to receive the seat-belt in a substantially vertical orientation. The blocking members 9a, 9b thus act as stop surfaces, in particular in case of slowing down (braking) of the vehicle in which the child seat is positioned. The child seat as shown in figure 1 is adapted for bilateral (universal) use, namely forwardly facing use (shown in figure 1) and rearwardly facing use (shown in figure 2), without modifying the belt positioning to fasten the child seat 1 to the vehicle seat 2. As shown in figure 1, in the forwardly facing orientation of the child seat 1 a backrest 5a of the bucket seat body 7 and engages a backrest 2a of the vehicle seat 2. In the orientation shown in figure 1, the hip belt portion 3b of the seat-belt 3 is (partially) enclosed by the belt receiving slot 9, wherein access to the receiving slot 9 is blocked by the seat portion 5, which in fact locks the seat-belt 3 within the belt receiving slot 9. The seat portion 5 is pulled backwards by the shoulder belt portion 3a of the seat-belt 3. By (freely) pivoting the seat portion 5 with respect to the bottom structure 4 access to the receiving slot 9 can be realised.

Fig. 2 shows a side view of the child vehicle seat 1 according to figure 1 in a rearwardly faced manner fastened to a vehicle seat 2. No modifications of the guiding elements 8a, 8b and/or the belt receiving slot 9 are required to allow the child seat 1 to be fastened to the vehicle seat 2 in the shown rearwardly faced orientation. As shown, the seat portion 5 is pivoted slightly more in the direction of the bottom structure 4, resulting in a more flat orientation of the seat portion 5, in particular of the bucket seat body 7. This manner of adjusting the orientation of the child seat does not require a physical modification (detaching and re-attaching components) of the child seat, which makes the child seat relatively fool proof, as a result of which misuse of the child seat can be prevented. The inclination of the bucket seat body 7 can further be adjusted by sliding the bucket seat body 7 across the seat frame 6. Instead of using guiding element 8b, guiding element 8a of the seat frame 6 is presently used to fasten the child seat 1.

Fig. 3 shows a rear view of the child vehicle seat 1 according to figure 1 and 2. In this figure the T-shaped seat frame 6 including both guiding elements 8a, 8b are shown in more detail. Each guiding element 8a, 8b comprises an upright slot 9a, 9b for containing and guiding the shoulder belt portion 3a of the seat-belt 3, wherein each slot 9a, 9b is defined by two bounding elements 16a, 16b, 16c, 16d. Each guiding element 8a, 8b further comprises a locking element 10a, 10b, being pivotably connected to the seat frame 6 between a closed state (as shown) and an open state in which access to the slots 9a, 9b and hence inserting of the seat-belt 3 into or removing of the seat-belt 3 from the slots 9a, 9b will be possible. In the closed state each locking element 10a, 10b forces the outer bounding element 16a, 16c towards the inner bounding element 16b, 16d to clamp the seat-belt 3 within the respective slots 9a, 9b, which will further improve the safety of the child seat during use. Preferably, the locking elements 10a, 10b cooperate with biasing means for forcing the locking elements 10a, 10b towards the closed state. Other locking mechanisms to secure the seat-belt 3 in the slots 9a, 9b may be conceivable for a skilled person.

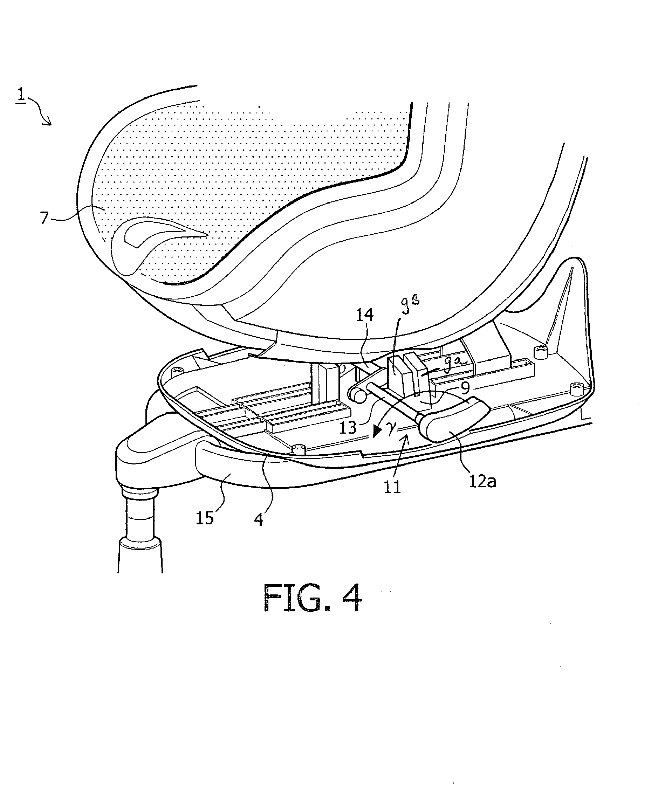

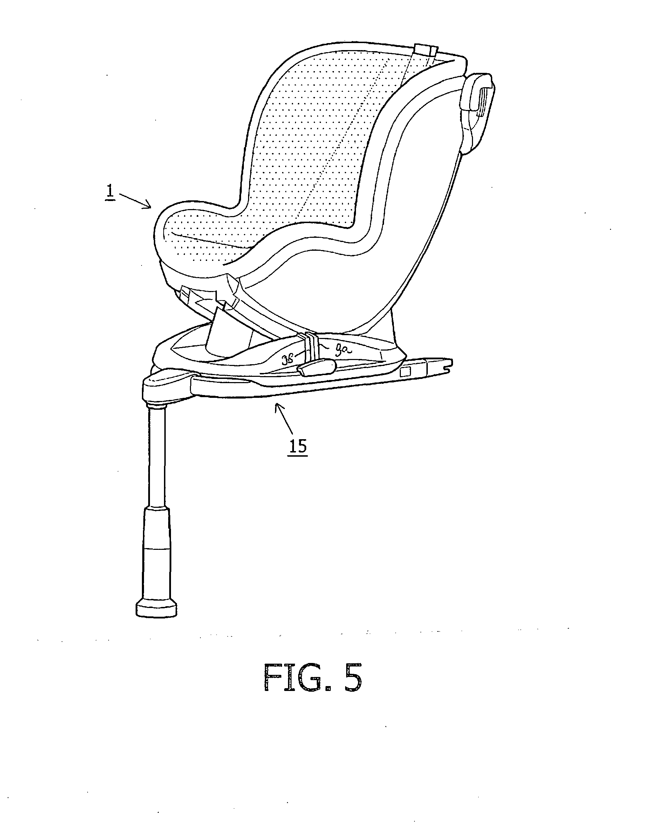

Fig. 4 shows a detailed cut-away view of a tensioning device 11 of the child vehicle seat 1 according to figures 1-3. The tensioning device 11 makes part of the bottom structure 4 and is adapted to tighten to tension a part of the hip belt portion 3b of the seat-belt which is inserted in the belt receiving slot 9 in order to improve fastening of the child seat 1 to the vehicle seat 2. The tensioning device 11 comprises two gripping handles 12a, 12b (of which only one gripping handle 12a is shown) which are both connected to a rotation axle 13. A central part of the rotation axle 13 is provided with a tensioning element 14 which protrudes with respect to the rotation axle 13. In the orientation shown in figure 4, the tensioning element 14 is positioned substantially horizontally and will be position below a hip belt portion 3b inserted in the belt receiving space 9. By rotating the rotation axle 13 about 180 degrees by using one or both gripping handles 12a, 12b (see arrow y), the tensioning element will be rotated and will engage and displace the hip-belt portion 3b so as to tension the seat-belt 3. Preferably, the tensioning device 11 can be locked in the tensioned state of the seat-belt 3. The child seat 1 is connected to an ISOFIX frame 15 as shown in more detail in figure 5.

Fig. 5 shows a perspective view of the child vehicle seat 1 provided with an ISOFIX frame 15. ISOFIX stands for "International Standards Organisation FIX" representing a internationally accepted standard for installing child seats into cars and is intended to make fitting child seats quick and simple. A precise definition of the ISOFIX frame is given in United Nations ECE Regulation No. 44. When cars are manufactured, ISOFIX anchorage points are built into them. Child seat manufacturers also provide ISOFIX anchors on their child seats. This will enable ISOFIX child seats to be simply plugged into the ISOFIX anchorage points in the car. The child seat is preferably connectable to the same (universal) ISOFIX frame in both a forwardly facing orientation and in a rearwardly facing orientation of the child seat, without modifying the ISOFIX frame.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. Child vehicle seat (1) for forwardly facing and rearwardly facing use, comprising:
- a bottom structure (4) adapted to be placed forwardly facing or rearwardly facing on
a passenger's seat (2) in a vehicle, and
a seat portion (7) with a guiding means (8a, 8b) for guiding the shoulder belt portion (3a) of a three-point seat-belt around a back side of the seat portion,
wherein said bottom structure (4) is provided with a transverse belt receiving space (9) for receiving at least a part of a hip belt portion (3b) of said three-point seat-belt (3), **characterised in that** said seat portion (7) is pivotably connected to said bottom structure (4) such that the mutual orientation between the shoulder belt portion guiding means (8a, 8b) and the hip belt portion guide means (9) can be changed.

2. Child vehicle seat according to claim 1, **characterized in that** the seat portion comprises a seat frame pivotably connected to the bottom structure, and a bucket seat body with a backrest portion, a foot end portion and side walls, wherein the bucket seat body is movably connected to the seat frame.

3. Child vehicle seat according to claim 2, **characterized in that** the seat frame comprises said guiding means for guiding the shoulder belt portion of a three-point seat-belt.

4. Child seat according to claim 2 or 3, **characterized in that** the bucket seat body is slidably connected to the seat frame.

5. Child seat according to one of the foregoing claims, **characterized in that** the guiding means of the seat portion comprises at least one first guiding element for guiding the shoulder belt portion of a three-point seat-belt during a forwardly facing use of the child seat, and at least one second guiding element for guiding the shoulder belt portion of a three-point seat-belt during a rearwardly facing use of the child seat.

6. Child seat according to one of the foregoing claims, **characterized in that** the belt receiving space is at least partially defined by at least one first blocking member for blocking the seat-belt during a forwardly faced use of the child vehicle seat, and at least one second blocking member for blocking the seat-belt during a rearwardly faced use of the child vehicle seat, said second blocking member being positioned at a distance from the first blocking member.

7. Child seat according to one of the foregoing claims, **characterized in that** a pivoting connection between the seat portion and the bottom structure is positioned in front of the belt receiving space.

8. Child seat according to one of the foregoing claims, **characterized in that** the seat portion is pivotable with respect to the bottom structure between a first state wherein the belt receiving space is accessible so as to allow insertion of at least a part of a hip belt portion of said thee-point seat-belt into said receiving space, and a second state wherein access to the belt receiving space is blocked.

9. Child seat according to claim 8, **characterized in that** during operation the child seat is oriented in the second state wherein access to the belt receiving space is blocked.

10. Child seat according to one of the foregoing claims, **characterized in that** the child seat comprises at least one belt tensioning device for tensioning at least a part of a hip belt portion of said three-point seat-belt within or at least near the belt receiving space.

11. Child seat according to claim 10, **characterized in that** the tensioning device comprises at least one tensioning element, said tensioning element being movable in a direction enclosing an angle with the seat-belt between a basic position and a tensioning position, in which tensioning position the seat-belt is tensioned by means of the belt tensioning device in use.

12. Child seat according to claim 11, **characterized in that** the tensioning element is securable in at least the tensioning position.

13. Child seat according to one of claims 10-12, **characterized in that** the tensioning device comprises at least one handle for operating said tensioning device.

14. Child seat according to one of the foregoing claims, **characterized in that** the child seat is adapted to be connected to an ISOFIX frame.

15. Child seat according to claim 14, **characterized in that** the child seat is adapted to be connected to the ISOFIX frame in both a forwardly facing orientation and in a rearwardly facing orientation of the child seat.

## Patentansprüche

1. Fahrzeugkindersitz (1) zur Benutzung in Fahrtrichtung und entgegen der Fahrtrichtung, der Folgendes umfasst:
- eine Bodenstruktur (4), die so ausgeführt ist, dass sie auf einem Fahrgastsitz (2) in einem Fahrzeug in Fahrtrichtung oder entgegen der Fahrtrichtung platziert werden kann, und
- einen Sitzabschnitt (7) mit einem Führungsmittel (8a, 8b) zum Führen des Schultergurtabschnitts (3a) eines Dreipunktsitzgurts um eine Rückseite des Sitzabschnitts,
wobei die Bodenstruktur (4) mit einem Quergurtaufnahmeraum (9) ausgestattet ist, um mindestens einen Teil eines Hüftgurtabschnitts (3b) des Dreipunktsitzgurts (3) aufzunehmen, **dadurch gekennzeichnet, dass** der Sitzabschnitt (7) mit der Bodenstruktur (4) schwenkbar so verbunden ist, dass die gegenseitige Ausrichtung zwischen dem Führungsmittel (8a, 8b) des Schultergurtabschnitts und dem Führungsmittel (9) des Hüftgurtabschnitts geändert werden kann,

2. Fahrzeugkindersitz nach Anspruch 1, **dadurch gekennzeichnet, dass** der Sitzabschnitt einen Sitzrahmen, der mit der Bodenstruktur schwenkbar verbunden ist, sowie einen Schalensitzkörper mit einem Lehnen-abschnitt, einem Fußendabschnitt und Seitenwänden um-fasst, wobei der Schalensitzkörper mit dem Sitzrahmen bewegbar verbunden ist.

3. Fahrzeugkindersitz nach Anspruch 2, **dadurch gekennzeichnet, dass** der Sitzrahmen das Führungsmittel zum Führen des Schultergurtabschnitts eines Dreipunktsitzgurts umfasst.

4. Kindersitz nach Anspruch 2 oder 3, **dadurch gekennzeichnet, dass** der Schalensitzkörper mit dem Sitzrahmen verschiebbar verbunden ist.

5. Kindersitz nach einem der vorstehend aufgeführten Ansprüche, **dadurch gekennzeichnet, dass** das Führungsmittel des Sitzabschnitts mindestens ein erstes Führungselement zum Führen des Schultergurtabschnitts eines Dreipunktsitzgurts während einer Benutzung des Kindersitzes in Fahrtrichtung sowie mindestens ein zweites Führungselement zum Führen des Schultergurt-abschnitts eines Dreipunktsitzgurts während einer Benutzung des Kindersitzes entgegen der Fahrtrichtung umfasst.

6. Kindersitz nach einem der vorstehend aufgeführten Ansprüche, **dadurch gekennzeichnet, dass** der Gurtaufnahmeraum mindestens teilweise durch mindestens ein erstes Blockierelement zum Blockieren des Sitz-gurts während einer Benutzung des Fahrzeugkindersitzes in Fahrtrichtung sowie mindestens ein zweites Blockierelement zum Blockieren des Sitzgurts während einer Benutzung des Fahrzeugkindersitzes entgegen der Fahrtrichtung definiert ist, wobei das zweite Blockierelement in einem Abstand vom ersten Blockierelement positioniert ist.

7. Kindersitz nach einem der vorstehend aufgeführten Ansprüche, **dadurch gekennzeichnet, dass** eine Schwenkverbindung zwischen dem Sitzabschnitt und der Bodenstruktur vor dem Gurtaufnahmeraum positioniert ist.

8. Kindersitz nach einem der vorstehend aufgeführten Ansprüche, **dadurch gekennzeichnet, dass** der Sitzabschnitt im Verhältnis zur Bodenstruktur zwischen einem ersten Zustand, in dem der Gurtaufnahmeraum zugänglich ist, um mindestens einen Teil eines Hüftgurtabschnitts des Dreipunktsitzgurts in den Gurtaufnahmeraum einführen zu können, und einem zweiten Zu-stand, in dem ein Zugang zum Gurtaufnahmeraum blockiert ist, schwenkbar ist.

9. Kindersitz nach Anspruch 8, **dadurch gekennzeichnet, dass** der Kindersitz während des Einsatzes im zweiten Zustand ausgerichtet ist, in dem ein Zugang zum Gurtaufnahmeraum blockiert ist.

10. Kindersitz nach einem der vorstehend aufgeführten Ansprüche, **dadurch gekennzeichnet, dass** der Kindersitz mindestens eine Gurtstraffungsvorrichtung umfasst, um mindestens einen Teil eines Hüftgurtabschnitts des Dreipunktsitzgurts innerhalb oder mindestens in der Nähe des Gurtaufnahmeraums zu straffen.

11. Kindersitz nach Anspruch 10, **dadurch gekennzeichnet, dass** die Straffungsvorrichtung mindestens ein Straffungselement umfasst, wobei das Straffungselement in einer Richtung, die einen Winkel zum Sitzgurt zwischen einer Basisposition und einer Straffungsposition einschließt, bewegbar ist, wobei der Sitzgurt in dieser Straffungsposition mittels der Gurtstraffungsvorrichtung im Gebrauch gestrafft wird.

12. Kindersitz nach Anspruch 11, **dadurch gekennzeichnet, dass** das Straffungselement mindestens in der Straffungsposition gesichert werden kann.

13. Kindersitz nach einem der Ansprüche 10 bis 12, **dadurch gekennzeichnet, dass** die Straffungsvorrichtung mindestens einen Griff zum Betätigen der Straffungsvorrichtung umfasst.

14. Kindersitz nach einem der vorstehend aufgeführten Ansprüche, **dadurch gekennzeichnet, dass** der Kindersitz so ausgeführt ist, dass er mit einem ISOFIX-Rahmen verbunden werden kann.

15. Kindersitz nach Anspruch 14, **dadurch gekennzeichnet, dass** der Kindersitz so ausgeführt ist, dass er sowohl bei einer Benutzung in Fahrtrichtung als auch bei einer Benutzung entgegen der Fahrtrichtung mit dem ISOFIX-Rahmen verbunden werden kann.

## Revendications

1. Siège-auto pour enfant (1) orientable face à la route et face à la banquette, comprenant :
- une structure inférieure (4) prévue pour être placée face à la route ou face à la banquette sur un siège de passager (2) dans un véhicule, et
- une portion de siège (7) avec un moyen de guidage (8a, 8b) pour guider la portion de ceinture d'épaule (3a) d'une ceinture de sécurité à trois points autour d'un côté arrière de la portion de siège,
ladite structure inférieure (4) étant pourvue d'un espace de réception de ceinture transversale (9) pour recevoir au moins une partie d'une portion de ceinture abdominale (3b) de ladite ceinture de sécurité à trois points (3), **caractérisé en ce que** ladite portion de siège (7) est connectée de manière pivotante à ladite structure inférieure (4) de telle sorte que l'orientation mutuelle entre le moyen de guidage (8a, 8b) de la portion de ceinture d'épaule et le moyen de guidage de la portion de ceinture abdominale (9) puisse être modifiée.

2. Siège-auto pour enfant selon la revendication 1, **caractérisé en ce que** la portion de siège comprend un cadre de siège connecté de manière pivotante à la structure inférieure, et un corps de siège baquet avec une portion de dossier, une portion d'extrémité pour les pieds et des parois latérales, le corps de siège baquet pouvant être connecté de manière mobile au cadre de siège.

3. Siège-auto pour enfant selon la revendication 2, **caractérisé en ce que** le cadre de siège comprend ledit moyen de guidage pour guider la portion de ceinture d'épaule d'une ceinture de sécurité à trois points.

4. Siège pour enfant selon la revendication 2 ou 3, **caractérisée en ce que** le corps de siège baquet est connecté de manière coulissante au cadre de siège.

5. Siège pour enfant selon l'une quelconque des revendications précédentes, **caractérisé en ce que** le moyen de guidage de la portion de siège comprend au moins un premier élément de guidage pour guider la portion de ceinture d'épaule d'une ceinture de sécurité à trois points lors d'une utilisation orientée face à la route du siège pour enfant, et au moins un deuxième élément de guidage pour guider la portion de ceinture d'épaule d'une ceinture de sécurité à trois points au cours d'une utilisation orientée face à la banquette du siège pour enfant.

6. Siège pour enfant selon l'une quelconque des revendications précédentes, **caractérisé en ce que** l'espace de réception de ceinture est au moins en partie défini par au moins un premier organe de blocage pour bloquer la ceinture de sécurité au cours d'une utilisation orientée face à la route du siège-auto pour enfant, et par au moins un deuxième organe de blocage pour bloquer la ceinture de sécurité au cours d'une utilisation orientée face à la banquette du siège-auto pour enfant, ledit deuxième organe de blocage étant positionné à une certaine distance du premier organe de blocage.

7. Siège pour enfant selon l'une quelconque des revendications précédentes, **caractérisé en ce qu'**une connexion pivotante entre la portion de siège et la structure inférieure est positionnée à l'avant de l'espace de réception de ceinture.

8. Siège pour enfant selon l'une quelconque des revendications précédentes, **caractérisé en ce que** la portion de siège peut pivoter par rapport à la structure inférieure entre un premier état dans lequel l'espace de réception de ceinture est accessible de manière à permettre l'insertion d'au moins une partie d'une portion de ceinture abdominale de ladite ceinture de sécurité à trois points dans ledit espace de réception, et un deuxième état dans lequel l'accès à l'espace de réception de ceinture est bloqué.

9. Siège pour enfant selon la revendication 8, **caractérisé en ce qu'**au cours de l'utilisation, le siège pour enfant est orienté dans le deuxième état dans lequel l'accès à l'espace de réception de ceinture est bloqué.

10. Siège pour enfant selon l'une quelconque des revendications précédentes, **caractérisé en ce que** le siège pour enfant comprend au moins un dispositif tendeur de ceinture pour tendre au moins une partie d'une portion de ceinture abdominale de ladite ceinture de sécurité à trois points à l'intérieur de l'espace de réception de ceinture ou au moins à proximité de celui-ci.

11. Siège pour enfant selon la revendication 10, **caractérisé en ce que** le dispositif tendeur comprend au moins un élément tendeur, ledit élément tendeur pouvant être déplacé dans une direction formant un angle avec la ceinture de sécurité entre une position de base et une position tendue, dans laquelle position tendue la ceinture de sécurité étant tendue au moyen du dispositif tendeur de ceinture pendant l'utilisation.

12. Siège pour enfant selon la revendication 11, **caractérisé en ce que** l'élément tendeur peut être fixé dans au moins la position tendue.

13. Siège pour enfant selon l'une quelconque des revendications 10 à 12, **caractérisé en ce que** le dispositif tendeur comprend au moins une poignée pour faire fonctionner ledit dispositif tendeur.

14. Siège pour enfant selon l'une quelconque des revendications précédentes, **caractérisé en ce que** le siège pour enfant est prévu pour être connecté à un cadre ISOFIX.

15. Siège pour enfant selon la revendication 14, **caractérisé en ce que** le siège pour enfant est prévu pour être connecté au cadre ISOFIX à la fois dans une orientation face à la route et dans une orientation face à la banquette du siège pour enfant.
